# EUROPÄISCHE PATENTANMELDUNG

(11) **EP 2 549 606 A1**
(43) Veröffentlichungstag der Anmeldung: **23.01.2013**
(21) Anmeldenummer: 11174913.1
(22) Anmeldetag: 21.07.2011
(51) Int. Cl.: H02H 1/00, G01R 15/18, H02H 7/09

(54) **Elektronisches Überlastrelais**

(71) Anmelder: Eaton Industries GmbH, 53115 Bonn (DE)
(72) Erfinder: Meid, Wolfgang, 56218 Mülheim-Kärlich (DE)
(74) Vertreter: Leadbetter, Benedict

(57) **Zusammenfassung**

Die Erfindung betrifft ein elektronisches Überlastrelais (1) mit internen Phasenleitern (31; 32; 33), mit diesen verketteten Stromwandlern (5; 6) und einer Fehlererkennungsschaltung (7), die beim Auftreten von Fehlerströmen die Phasenströme (I1; I2; I3) unterbricht. Der erste Phasenleiter (31) ist mit einem ersten Stromwandler (5) verbunden. Der zweite und der dritte Phasenleiter (32; 33) sind beide mit einem zweiten Stromwandler (6) verbunden, wobei der dritte Phasenleiter (33) gegenüber dem zweiten Phasenleiter (32) gegensinnig verläuft. Das Überlastrelais (1) schützt vor Überströmen und Phasenausfällen in jeweils einer oder mehreren der drei Stromphasen.

## Beschreibung

Die Erfindung betrifft ein elektronisches Überlastrelais nach dem Oberbegriff von Anspruch 1 und dient dem Schutz eines von einer dreiphasigen Stromquelle gespeisten elektrischen Verbrauchers, insbesondere eines Drehstrommotors, vor Überlastung bei über einer vorgebbaren Zeit auftretendem Überstrom oder bei einem Phasenausfall.

Aus der Druckschrift WO 9903185 A1 ist ein derartiges Überlastrelais bekannt. Dieses Überlastrelais beinhaltet drei mit der dreiphasigen Last verbindbare Phasenleiter, jeweils einen mit einem der Phasenleiter gekoppelten elektromagnetischen Stromwandler zur Bereitstellung eines den in jedem Phasenleiter fließenden Strom darstellenden Signals, einen Schalter zum elektrischen Trennen der Phasenleiter von der Last, einer mit den Stromwandlern gekoppelten Fehlererkennungsschaltung zum Betätigen des Schalters als Reaktion auf das Auftreten von mindestens einem vorbestimmten Fehlerzustand, insbesondere Überstrom oder Phasenausfall, einer von mindestens einem der Stromwandler gespeisten Stromversorgung zur Bereitstellung von Strom für die Fehlererkennungsschaltung sowie einer Referenzspannung.

Von Nachteil bei dem vorgenannten Überstromrelais ist, dass zur Auswertung der Phasenströme und zur Phasenausfallerkennung für jeden Phasenleiter ein Stromwandler, d.h. bei drei Stromphasen demnach drei Stromwandler, benötigt werden. Dies erfordert, wie aus der Druckschrift EP 1089309 A2 zu erkennen ist, einen erheblichen Platzbedarf und führt zu nicht unerheblichen Herstellungskosten.

Druckschrift US 4879626 A zeigt in einer Ausführungsform ein elektronisches Überlastrelais, das lediglich für nur zwei der drei Phasenleiter mit jeweils einem Stromwandler verbunden ist, also insgesamt nur zwei Stromwandler aufweist. Dieses Überlastrelais ist mangels eines den dritten Phasenstrom darstellenden Signals nur unzureichend zur Überstromerkennung und überhaupt nicht für die Phasenausfallerkennung geeignet.

Der Erfindung liegt daher die Aufgabe zugrunde, den Aufwand hinsichtlich der Stromwandler für ein zur Erkennung von Überströmen und Phasenausfall geeignetes dreiphasiges Überlastrelais zu senken.

Ausgehend von einem elektronischen Überlastrelais der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Aufgrund der gegensinnigen Führung des zweiten und des dritten internen Phasenleiters durch den gemeinsamen zweiten Stromwandler sind diese mit dem zweiten Stromwandler unter einem Phasenwinkelabstand von 300 ° zwischen zweitem und dritten Phasenstrom elektromagnetisch gekoppelt. Dieser Phasenwinkelabstand erlaubt vom Ausgang der gemeinsamen Sekundärwicklung des zweiten Stromwandlers die Ermittlung des momentan fließenden maximalen Stromes in den zweiten und dritten Phasenleitern als auch die Erkennung eines Phasenausfalls für einen oder beide der zugehörige Stromphasen durch die auswertende Fehlererkennungsschaltung. Fehlerströme oder Phasenausfall in der ersten Stromphase werden wie üblich über die vom ersten Stromwandler der Fehlererkennungsschaltung zugeführten Signale ermittelt. Im Sinne der Erfindung ist es gleichgültig, welcher der drei Phasenleiter als jeweils erster, zweiter bzw. dritter Phasenleiter bezeichnet wird.

Durch die Einsparung eines der üblicherweise drei Stromwandler werden der Raumbedarf, der Materialaufwand und die Herstellungskosten für die Stromwandler des erfindungsgemäßen elektronischen Überlastrelais in erheblichem Maße gesenkt, wobei die Überwachungs- und Schutzfunktionen gegenüber herkömmlicher elektronischer Überlastrelais mit drei Stromwandlern keine Einschränkungen erfahren..

Bei Verwendung von Ringkern-Stromwandlern wird in vorteilhafter Weise der zweite Phasenleiter direkt durch die Öffnung des Ringkerns geführt, der dritte Phasenleiter wird dagegen mäanderförmig an gegenüber liegenden Außenseiten am zweiten Stromwandler vorbei und im mittleren Teil durch die Öffnung des Ringkerns gegensinnig zum zweiten Phasenleiter geführt. Unter Ringkern ist hier ein allgemein geschlossener Kern zu verstehen, der z.B. eine die Form eines Hohlzylinders oder eines Hohlquaders aufweisen kann.

Die Schaltvorrichtung ist in zweckmäßiger Weise durch einen dreipoligen elektromagnetischen Schalter ausgeführt, durch den bei Auftreten eines Überstroms oder eines Phasenausfalls die internen Phasenleiter lastseitig aufgetrennt werden und damit die Last stromlos geschaltet wird.

Eine vorteilhafte Weiterbildung des erfindungsgemäßen Überlastrelais besteht darin, die Fehlererkennungsschaltung mit einem Meldeausgang auszustatten. Der Meldeausgang kann mit einem weiteren Schaltkontakt der elektromagnetischen Schaltvorrichtung oder einem Schaltkontakt eines von der Fehlererkennungsschaltung gesteuerten elektromagnetischen Hilfsrelais oder elektronischen Schalters verbunden sein. Ein vom Meldeausgang ausgegebenes Meldesignal kann zum Signalisieren von erkannten Fehlerzuständen und bzw. oder Steuern weiterer Schutzvorrichtungen dienen.

Weitere Einzelheiten und Vorteile der Erfindung ergeben sich aus dem folgenden, anhand von Figuren erläuterten Ausführungsbeispiel. Es zeigen
- Figur 1:: ein Prinzipschaltbild des erfindungsgemäßen elektronischen Überlastrelais;
- Figur 2:: eine Detaildarstellung im Bereich der Stromwandler aus Fig. 1;
- Figur 3:: eine Prinzipdarstellung der primär- und sekundärseitigen Ströme im zweiten Stromwandler aus Fig. 1 bzw. Fig. 2 bei fehlerfreien Phasenströmen;
- Figur 4:: desgleichen bei Auftreten eines Überstroms;
- Figur 5:: desgleichen bei Auftreten eines Phasenausfalls.

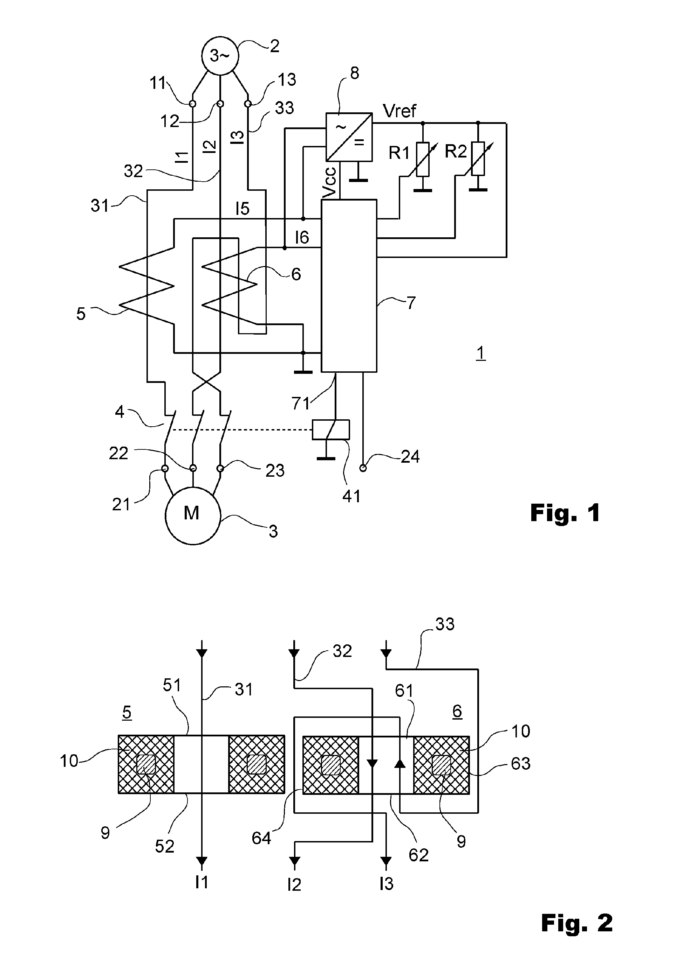

Das elektronische Überlastrelais 1 nach Fig. 1 ist über seine Eingangsklemmen 11, 12, 13 mit einer Dreiphasen-Stromquelle 2 und über seine Ausgangsklemmen 21, 22, 23 mit einer zu schützenden Last 3 in Form eines Drehstrommotors verbunden. Von den Eingangsklemmen 11, 12 bzw. 13 gehen intern ein erster Phasenleiter 31, ein zweiter 32 Phasenleiter bzw. ein dritter Phasenleiter 33 ab, die über eine dreipolige Schalteinrichtung 4 mit den Ausgangsklemmen 21, 22 bzw. 23 verbunden sind. Die Phasenleiter 31, 32 bzw. 33 führen die von der Last 3 aufgenommenen ersten, zweiten bzw. dritten Phasenströme I1, I2 bzw. I3. Das Überlastrelais 1 weist zwei Stromwandler 5 und 6 auf, mit denen die Phasenleiter 31, 32 und 33 primärseitig elektromagnetisch gekoppelt sind. Sekundärseitig werden den Stromwandlern 5 und 6 erste bzw. zweite Stromsignale 15 bzw. I6 entnommen und einer Fehlererkennungsschaltung 7 zugeführt. Die Stromsignale I5 und I6 werden außerdem einer Stromversorgung 8 zugeführt. Die Stromversorgung 8 liefert ausgangsseitig in geläufiger Weise eine Versorgungsspannung Vcc zur Gleichstromversorgung der Fehlererkennungsschaltung 7 und eine Referenzspannung Vref - auch im Falle, wenn einer oder zwei der drei Phasenströme I1, I2, I3 ausfallen.

Die Stromsignale I5, I6 sind Abbilder der Phasenströme I1, I2, I3 und werden in gewohnter Weise durch die Fehlererkennungsschaltung 7 aufbereitet, verarbeitet und ausgewertet. Funktion und Aufbau der Fehlererkennungsschaltung 7 folgt im Grunde bekannten Fehlererkennungsschaltungen, beispielsweise nach DE 2924419 A1 oder WO 9903185 A1. Die Fehlererkennungsschaltung 7 steuert über einen Signalausgang 71 die Relaisspule 41 der als elektromagnetischer Schalter ausgebildeten Schalteinrichtung 4. Bei Erkennung von Fehlerzuständen der Phasenströme I1, I2 oder bzw. und I3 bewirkt die Fehlererkennungsschaltung 7 das Öffnen der elektromagnetischen Schalteinrichtung 4, trennt damit die Last 3 von der Stromquelle 2 und gibt gleichzeitig über einen Meldeausgang 24 ein Meldesignal nach außen.

Der erste Phasenleiter 31 wird in gewohnter Weise durch den ersten Stromwandler 5 geführt. Das sekundärseitig am ersten Stromwandler 5 anstehende erste Stromsignal I5 ist demnach ein einfaches Abbild des ersten Phasenstroms I1 und wird in gewohnter Weise durch die Fehlererkennungsschaltung sowohl hinsichtlich des Auftretens eines Überstroms als auch hinsichtlich des Auftretens eines Phasenausfalls überwacht.. Durch den zweiten Stromwandler 6 werden sowohl der zweite Phasenleiter 32 als auch der dritte Phasenleiter 33 - und zwar zueinander gegensinnig - geführt. Das sekundärseitig am zweiten Stromwandler 6 anstehende zweite Stromsignal 16 stellt nun die Vektorsumme der um den Phasenwinkel 120 ° + 180 ° = 300 ° zueinander versetzten zweiten und dritten Phasenströme I2 und I3 dar. Das so gebildete zweite Stromsignal I6 ist zur gleichzeitigen Überwachung des zweiten Phasenstroms I2 und des dritten Phasenstrom I3 durch die Fehlererkennungsschaltung 7 geeignet, und zwar sowohl hinsichtlich des Auftretens von Überströmen als auch hinsichtlich des Auftretens von Phasenausfällen.

Das erfindungsgemäße Überlastrelais 1 erlaubt also trotz Einsparung eines Stromwandlers gegenüber herkömmlichen Überlastrelais den Schutz der Last 3 vor Überstrom und vor Phasenausfall in einem oder mehreren der drei Phasenleiter 31, 32, 33.

Zum Einstellen der auslösenden Überlastbedingungen, d.h. des Nennstroms und des Trägheitsgrades der Auslösung bei Überschreitung des eingestellten Nennstroms, ist das Überlastrelais 1 mit von außen zugängigen Einstellmitteln vorgesehen - im Ausführungsbeispiel in Form eines ersten Stellwiderstandes R1 zum einstellen des Nennstroms und eines zweiten Stellwiderstandes R2 zum Einstellen des Trägheitsgrades. Eine Auslösung bewirkt das Öffnen der Schalteinrichtung 4 und erfolgt entsprechend einer mittels der Fehlererkennungsschaltung 7 realisierten Kennlinie, die in bekannter Weise das Produkt des Effektivwertquadrats der Phasenströme I1, I2 und I3 mit der seit Überschreitung des Nennstroms verstrichenen Zeit oder die das Integral des Effektivwertes über die seit Überschreitung des Nennstroms verstrichenen Zeit abbildet. An einem Referenzeingang der Fehlererkennungsschaltung 7 und über den Stellwiderständen R1, R2 liegt die Referenzspannung Vref an. Von den Stellabgriffen der Stellwiderstände R1, R2 wird ein Teil der Referenzspannung Vref als Abbild der Einstellwerte für die auslösenden Überlastbedingungen der Fehlererkennungsschaltung 7 zugeführt.

Fig. 2 zeigt schematisch im Detail die Anordnung der Phasenleiter 31, 32, 33 und der Stromwandler 5, 6 zueinander. Die Stromwandler 5 und 6 sind hier als Ringkernwandler ausgeführt. Um einen ferromagnetischen Ringkern 9 ist jeweils eine Sekundärwicklung 10 angeordnet.

Der erste Phasenleiter 31 tritt in üblicher Weise in eine Ringkerneintrittsöffnung 51 des ersten Stromwandlers 5 ein und aus einer Ringkernaustrittsöffnung 52 des ersten Stromwandlers 5 aus.

Der zweite Phasenleiter 32 tritt in gleicher Weise in eine Ringkerneintrittsöffnung 61 des zweiten Stromwandlers 6 ein und aus einer Ringkernaustrittsöffnung 62 des zweiten Stromwandlers 6 aus.

Der dritte Phasenleiter 33 wird gleichsinnig zum zweiten Phasenleiter 32 an einer ersten Außenseite 63 des zweiten Stromwandler 6 vorbeiführt, tritt danach im Gegensinne zum zweiten Phasenleiter 32 in die Ringaustrittsöffnung 62 des zweiten Stromwandlers 6 ein und aus der Ringeintrittsöffnung 61 des zweiten Stromwandlers 6 aus, um danach wieder gleichsinnig zum zweiten Stromleiter 32 an einer zweiten Außenseite 64 des zweiten Stromwandlers 6, die der ersten Außenseite 63 diametral gegenüber liegt, vorbeigeführt zu werden. Damit sind der zweite und der dritte Phasenstrom I2 und I3 zueinander gegensinnig mit dem zweiten Stromwandler verkettet. Da alle drei Phasenströme I1, I2, I3 zueinander einen Phasenabstand von 120 ° aufweisen, sind der zweite und der Phasenstrom I2 bzw. I3 durch den gegensinnigen Verlauf im zweiten Stromwandler 6 um weitere 180°, d.h. insgesamt um 300° versetzt.

Die Anordnung nach Fig. 1 und insbesondere nach Fig. 2 macht den verminderten Raumbedarf für die nur noch zwei erforderlichen Stromwandler 5 und 6 deutlich. Die Verlängerung des dritten Phasenleiters 33 zur Realisierung der Richtungsänderungen können die durch den verminderten Raumbedarf und die verminderten Materialkosten gewonnenen Vorteile bei Weiten nicht aufwiegen.

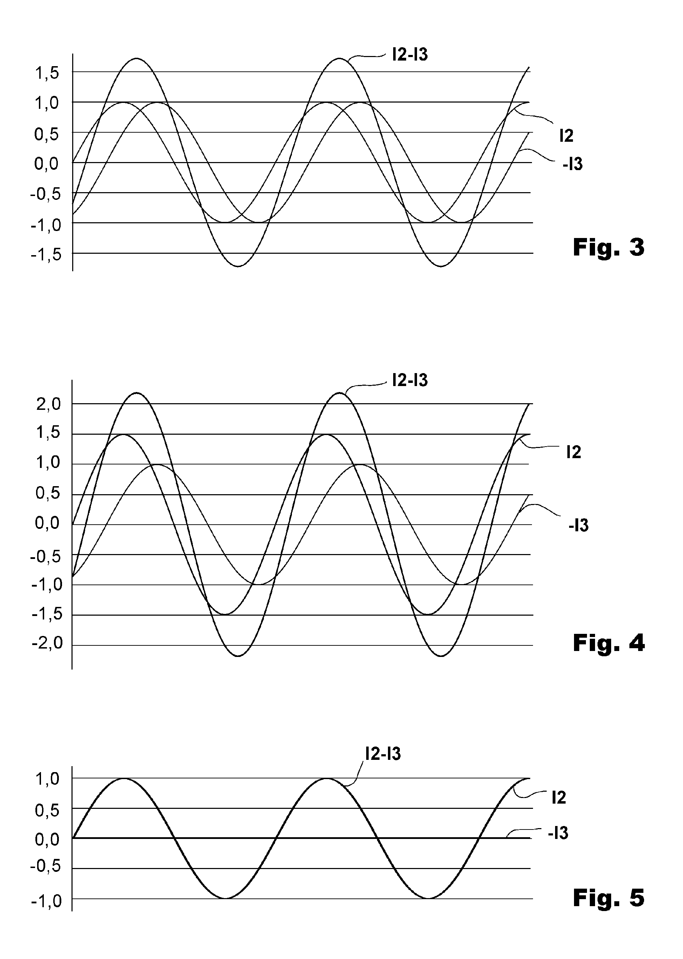

In Fig. 3 bis Fig. 5 ist der zeitliche Verlauf der mit dem zweiten Stromwandler 6 verketteten zweiten und dritten Phasenströme I2 und I3 für verschiedenen Situationen dargestellt. Die Richtung des dritten Phasenstroms I3 durch den zweiten Stromwandler 6 verläuft gegenüber seiner Richtung in die betreffende Eingangsklemme 13 bzw. aus der betreffenden Ausgangsklemme 23 gegensinnig. Daher wird der dritte Phasenstrom in Fig. 3 bis Fig. 5 als -I3 dargestellt. Die mit dem zweiten Stromwandler 6 verkettete Summe der Phasenströme wird demzufolge in Fig. 3 bis Fig. 5 als I2-I3 dargestellt. Die verkettete Stromsumme I2-I3 entspricht dann, abgesehen von dem durch den zweiten Stromwandler 6 beaufschlagten Stromwandlungsfaktor, dem sekundärseitig am zweiten Stromwandler 6 anstehenden zweiten Stromsignal I6.

Fig. 3 zeigt die zeitlichen Verläufe des zweite Phasenstromes I2, des umgelenkten dritten Phasenstromes -I3 und der verketteten Stromsumme I2-I3 bei Nennstrom. Das aus der verketteten Stromsumme I2-I3 gebildete zweite Stromsignal I6 wird von der Fehlererkennungsschaltung 7 als fehlerfrei erkannt.

Fig. 4 zeigt die zeitlichen Verläufe des zweiten Phasenstromes I2, des umgelenkten dritten Phasenstromes -I3 und der verketteten Stromsumme I2-I3 für den Fall, dass der dritte Phasenstrom I3 gleich dem eingestellten Nennstrom ist, der zweite Phasenstrom I2 jedoch den eingestellten Nennstrom merklich überschreitet. In diesem Falle übersteigt die Amplitude der verketteten Stromsumme I2-I3 deutlich ihren aus dem Vergleich mit Fig. 3 ersichtlichen Normalwert. Das sich sekundärseitig ergebende zweite Stromsignal I6 wird von der Fehlererkennungsschaltung 7 als fehlerhaft erkannt und führt in Abhängigkeit vom eingestellten Trägheitsgrad zur Unterbrechung der Verbindung zwischen Stromquelle 2 und Last 3.

Fig. 5 zeigt die zeitlichen Verläufe des zweiten Phasenstromes I2, des umgelenkten dritten Phasenstromes -I3 und der verketteten Stromsumme I2-I3 für den Fall, dass der zweite Phasenstrom I2 gleich dem eingestellten Nennstrom ist, der dritte Phasenstrom I3 jedoch infolge eines Ausfalls der dritten Stromphase gleich Null ist. Die verkettete Stromsumme I2-I3 ist dann gleich dem zweiten Phasenstrom I2 und unterschreitet damit deutlich ihren aus dem Vergleich mit Fig. 3 ersichtlichen Normalwert. Das sich sekundärseitig ergebende zweite Stromsignal I6 wird von der Fehlererkennungsschaltung 7 in diesem Falle ebenfalls als fehlerhaft erkannt und führt zur Unterbrechung der Verbindung zwischen Stromquelle 2 und Last 3.

Die Erkennung des sich aus dem ersten Phasenstrom I1 ergebenden ersten Stromsignals I5 erfolgt in ähnlicher und bekannter Weise und wird daher nicht gesondert beschrieben. Die Versorgungsspannung Vcc und die Referenzspannung Vref werden bei dem vorstehenden Ausführungsbeispiel intern aus den Stromsignalen I5, I6 erzeugt. Es liegt aber auch im Umfang der Erfindung, wenn die Versorgungsspannung Vcc und die Referenzspannung Vref von einer externen Spannungsversorgung geliefert oder aus einer externen Spannungsversorgung erzeugt werden.

### Tabelle der Bezugszeichenliste:

- 1: Überlastrelais
- 2: Stromquelle
- 3: Last
- 4: Schalteinrichtung
- 5; 6: Stromwandler
- 7: Fehlererkennungsschaltung
- 8: Stromversorgung
- 9: Ringkern
- 10: Sekundärwicklung
- 11; 12; 13: Eingangsklemme
- 21; 22; 23: Ausgangsklemme
- 24: Meldeausgang
- 31; 32; 33: Phasenleiter
- 41: Relaisspule
- 51; 61: Ringkerneintrittsöffnung
- 52; 62: Ringkernaustrittsöffnung
- 63; 64: Außenseite
- 71: Signalausgang
- I1; I2; I3: Phasenstrom
- I5; I6: Stromsignal
- R1; R2: Stellwiderstand
- Vcc: Versorgungsspannung
- Vref: Referenzspannung

## Patentansprüche

1. Elektronisches Überlastrelais zum Schutz einer von einer dreiphasigen Stromquelle (2) gespeisten elektrischen Last (3), enthaltend
- eine einerseits stromquellenseitig und anderseits lastseitig zugängigen internen ersten, zweiten und dritten Phasenleiter (31 bzw. 32 bzw. 33),
- mit den Phasenleitern (31; 32; 33) primärseitig elektromagnetisch verkettete Stromwandler (5; 6) mit jeweils einer Sekundärwicklung (10) zum Bereitstellen von Stromsignalen (I5; I6), welche die in den Phasenleitern (31; 32; 33) fließenden Strömen darstellen,
- eine Schalteinrichtung (4) zum Trennen der Phasenleiter (31; 32; 33) von der Last (3),
- einer mit den Stromwandlern (5; 6) gekoppelten Fehlererkennungsschaltung (7) zum Betätigen der Schalteinrichtung (4) als Reaktion auf das Auftreten von mindestens einem vorbestimmten Fehlerzustand,
- einer Stromversorgung (8) zur Bereitstellung von Strom für die Fehlererkennungsschaltung (7) sowie von mindestens einer Referenzspannung (Vref),
**dadurch gekennzeichnet,**
- **dass** ein erster Stromwandler (5) mit dem ersten Phasenleiter (31) und ein zweiter Stromwandler (6) sowohl mit dem zweiten Phasenleiter (32) als auch mit dem dritten Phasenleiter (33) verbunden ist und
- **dass** der zweite und der dritte Phasenleiter (32; 33) elektromagnetisch gegensinnig mit dem zweiten Stromwandler (6) verkettet sind.

2. Elektronisches Überlastrelais nach vorstehendem Anspruch, **dadurch gekennzeichnet,**
- **dass** die Stromwandler (5; 6) als ringkernartige Wandler ausgebildet sind,
- **dass** der erste und der zweite Phasenleiter (31 bzw. 32) in eine Ringkerneintrittsöffnung (51 bzw. 61) des ersten bzw. zweiten Stromwandlers (5 bzw. 6) eintreten und aus einer Ringkernaustrittsöffnung (52 bzw. 62) des ersten bzw. zweiten Stromwandlers (5 bzw. 6) austreten und
- **dass** der dritte Phasenleiter (33) gleichsinnig zum zweiten Phasenleiter (32) an einer ersten Außenseite (63) des zweiten Stromwandler (6) vorbeiführt, danach gegensinnig zum zweiten Phasenleiter (32) in die Ringaustrittsöffnung (62) des zweiten Stromwandlers (6) eintritt und aus der Ringeintrittsöffnung (61) des zweiten Stromwandlers (6) austritt und danach wieder gleichsinnig zum zweiten Stromleiter (32) an einer zur ersten Außenseite (63) gegenüber liegenden zweiten Außenseite (64) des zweiten Stromwandlers (6) vorbeiführt.

3. Elektronisches Überlastrelais nach einem der vorstehenden Ansprüche,
**gekennzeichnet durch** einen mindestens dreipoligen elektromagnetischen Schalter (4, 41) als Schaltvorrichtung.

4. Elektronisches Überlastrelais nach einem der vorstehenden Ansprüche, **dadurch gekennzeichnet, dass** die Fehlererkennungsschaltung (7) mit einem Meldeausgang (24) ausgestattet ist.
